# EUROPEAN PATENT SPECIFICATION

(11) **EP 2 652 016 B1**
(45) Date of publication and mention of the grant of the patent: **29.04.2020**
(21) Application number: 11794884.4
(22) Date of filing: 11.11.2011
(51) Int. Cl.: C08J 5/06

(54) **COMPOSITES HAVING DISTORTIONAL RESIN COATED FIBERS**
VERBUNDSTOFFE MIT FASERN MIT EINER BESCHICHTUNG AUS VERZERRUNGSFÄHIGEM HARZ
COMPOSITES AYANT DES FIBRES DE DISTORSION REVÊTUES DE RÉSINE

(30) Priority: 14.12.2010 US 967512
(43) Date of publication of application: 23.10.2013
(73) Proprietor: The Boeing Company, Chicago, IL 60606-1596 (US)
(72) Inventor: SCHNEIDER, Terry L., Puyallup, Washington 98372 (US); CHRISTENSEN, Stephen, Sammamish, Washington 98075 (US); GOSSE, Jonathan H., Issaquah, Washington 98027 (US)
(74) Representative: Witte, Weller & Partner Patentanwälte mbB
(86) International application number: PCT/US2011/060472
(87) International publication number: WO 2012/082280

(56) References cited:
- WO-A1-2010/007163
- US-A- 3 864 203
- US-A- 4 842 933

## Description

### TECHNICAL FIELD

This disclosure generally relates to fiber reinforced resin composites, and deals more particularly with a composite having fibers coated with a distortional resin to improve the mechanical performance of a composite structure.

### BACKGROUND

US 3,864,203 discloses fiber reinforced elastomers. The approach described in this document addresses to glass coated metal fibers, wherein the glass coated fibers are coated with a glass fiber anchoring agent or impregnated with an elastomer compatible polymeric material for use as reinforcement in elastomeric products.

WO 2010/007163 A1 refers to a method for the preparation of a reinforced thermoset polymer composite, said thermoset polymer composite comprising coated fibers, the coating being used as a vehicle for the introduction of carbon nanotubes into the thermoset polymer.

US 4,842,933 discloses composites with improved fiber resin interfacial adhesion.

In fiber reinforced composites, the efficiency of load transfer between the fiber and the surrounding matrix at the micro-scale level, directly affects the overall mechanical performance of the composite at the continuum level. The region of the matrix that may be substantially affected by the presence of fibers, sometimes referred to as the "inter-phase" region, is the interfacial area of the matrix directly surrounding the fiber. In composites, it is this inter-phase region that experiences high shear strain due to the mismatch in elastic stiffness between the fibers and the surrounding matrix.

While various resin matrix formulations have been developed to maximize the distortional capability of a polymer resin, formulations demonstrating higher performance potential may have limitations such as limited fluid resistance and less than desired prepreg handling characteristics such as insufficient tack and/or prepreg handling life. These problems may be partially addressed by modifying the chemistry of the bulk polymer resin forming the matrix, however these modifications may require development of specialized monomers or additives which can add to product cost. Moreover, while these specialized formulations and additives may improve fluid resistance of the matrix resin, they may reduce other performance properties of the composite.

Adequate load transfer between the fiber and the matrix may be particularly problematic in composites using a high temperature matrix reinforced with carbon fibers because of the relatively high thermal strains generated at the resin-fiber interface. These thermal strains may enhance micro-crack susceptibility which typically may result in the cured composite having less than desired mechanical properties.

Accordingly, there is a need for a fiber reinforced polymer resin composite that exhibits improved load transfer ability between the reinforcing fibers and the surrounding resin matrix, particularly where the fibers have a relatively high modulus and the matrix is formed of a high temperature resin. There is also a need for a method of making such composites that uses conventional bulk resins and avoids the need for resin additives or special resin formulations.

### SUMMARY

A method of making a fiber reinforced polymer resin according to the present invention is defined in claim 1. A fiber reinforced resin composite having improved distortional deformation capability according to the present invention is defined in claim 6.

Further embodiments of the present invention are defined in the dependent claims.

Reinforcing fibers in a composite are coated with a polymeric resin having a relatively high distortional deformation capability compared to that of the surrounding bulk polymer resin forming the matrix. The coating creates an energy dissipative, distortional inter-phase region surrounding the fibers that optimizes resin-fiber load transfer across fiber discontinuities or defects, thereby improving the mechanical properties of the composite. The process of coating the fibers with a high distortion resin may be performed prior to impregnation of the fibers with the bulk matrix resin, thus allowing current commercially available fibers to be utilized in existing prepreg production processes. Substantial improvements in the mechanical performance of current composite materials may be achieved through the distortional fiber coating, such as increased strength and/or strain as well as potential improvements in delamination and micro-crack resistance. The use of fibers coated with a distortional resin may also aid in mitigating adverse effects caused by excessive thermal strain generated at the resin-fiber interface between high modulus fibers such as, without limitation, carbon fibers, and a high temperature resin matrix. Composite structures employing reinforcing fibers coated with high distortional resins may result in optimized composite designs that may reduce weight and cost.

According to one disclosed embodiment, a method is provided of making a fiber reinforced polymer resin, comprising coating reinforcing fibers with a first polymeric resin, and embedding the coated fibers in a second polymeric resin. The distortional deformation capability of the first polymeric resin is greater than that of the second polymeric resin, and the first polymeric resin may be any of various resin chemistries, such as epoxies, which are specifically designed to exhibit high deformation capability. The fibers may have a high modulus in relation to the modulus of the first polymeric resin. The method further comprises selecting the fibers from the group consisting of carbon fibers, glass fibers, organic fibers, metallic fibers and ceramic fibers. The method also comprises applying a coating of a third polymeric resin over the coating of the first polymeric resin, wherein the third polymeric resin has a distortional deformation capability greater than the first polymeric resin but less than the second polymeric resin.

According to another embodiment, a method is provided for making a fiber reinforced polymer composite, comprising providing a polymeric resin matrix and providing fibers for reinforcing the resin matrix. The method further comprises embedding the fibers in the matrix, and forming a distortional inter-phase region between the fibers and the matrix for improving load transfer between the fibers and the matrix. Forming the inter-phase region includes coating the fibers with a polymeric distortional resin having at least one property different from the resin matrix. The at least one property is selected from the group consisting of fluid resistance, increased modulus, high temperature performance, processability, and handling properties. Embedding the fibers in the matrix includes impregnating the fibers with the matrix resin, and curing the matrix. Providing fibers includes selecting the fibers from the group consisting of carbon fibers, organic fibers, metallic fibers and ceramic fibers. Providing fibers for reinforcing the resin matrix includes providing two groups of fibers respectively having different moduli, and forming the distortional inter-phase region between the fibers and the matrix includes coating the fibers in each of the groups with differing polymeric resins each having a distortional deformation capability higher than the bulk matrix resin.

According to still another disclosed embodiment, a fiber reinforced resin composite comprises a polymeric resin matrix, reinforcing fibers held in the matrix, and a coating on the fibers for improving load transfer between the fibers and the matrix. The coating includes a polymeric resin having a distortional deformation capability greater than that of the resin matrix. The coating includes first and seconds layers of polymeric resin respectively having differing distortional deformation capabilities each greater than the distortional deformation capability of the resin matrix. The fibers are impregnated with the matrix resin and may include at least two groups thereof respectively having differing stiffnesses or strengths.

According to a further embodiment, a fiber reinforced resin composite comprises a polymeric resin matrix, reinforcing fibers held in the matrix, and an inter-phase region having a high distortional deformation capability relative to the resin matrix. The inter-phase region is defined by at least a first polymeric resin coating on the fibers. The inter-phase region may be defined by a second polymeric resin coating over the first polymeric coating. The first polymeric resin coating may be a high temperature resin.

### BRIEF DESCRIPTION OF THE ILLUSTRATIONS

FIG. 1 is an illustration of a functional block diagram of a composite employing distortion resin coated reinforcing fibers.
FIG. 2 is an illustration of a sectional view of a fiber tow or strand employing a bundle of distortion resin coated smaller diameter filaments.
FIG. 3 is an illustration of the area designated as '3' in FIG. 2, and a sectional view distortional resin coated filaments.
FIG. 4 is an illustration of a cross sectional view of an individual filament having a distortion resin coating.
FIG. 5 is an illustration similar to FIG. 3 but showing the use of a two types of reinforcing fibers having differing moduli or strength and distortion resin coatings.
FIG. 6 is an illustration of a cross sectional view of a fiber having multiple distortion resin coatings.
FIG. 7 is an illustration of a sectional view of a composite having discontinuous reinforcing fibers coated with a distortion resin.
FIG. 8 is an illustration of a flow diagram of a method of fabricating a composite structure using distortion resin coated fibers.
FIG. 9 is an illustration of a flow diagram of aircraft production and service methodology.
FIG. 10 is an illustration of a block diagram of an aircraft.

### DETAILED DESCRIPTION

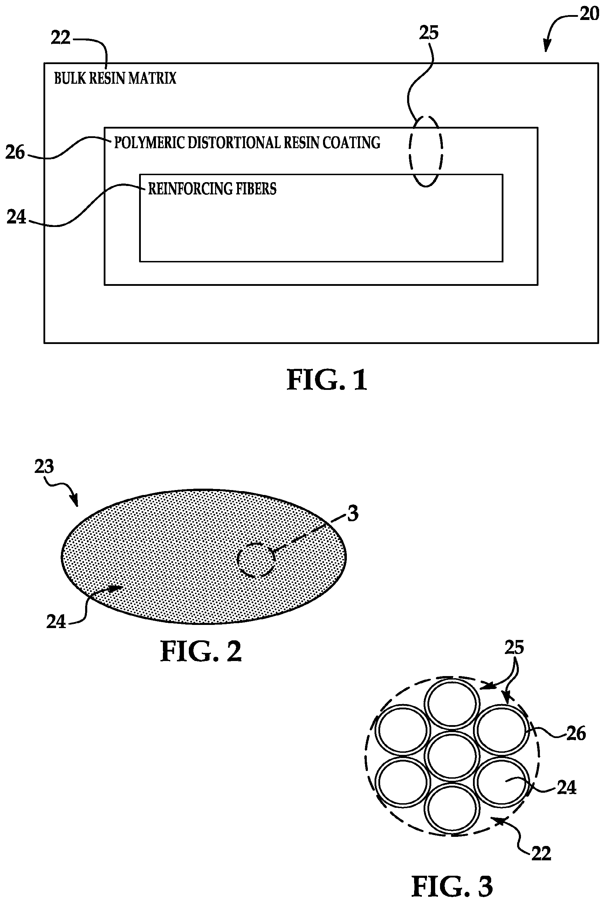

Referring to FIGS. 1-4, a composite 20 comprises reinforcing fibers 24 embedded in a bulk resin matrix 22. The reinforcing fibers 24 may be continuous or discontinuous (e.g. chopped fibers) and may be formed from any of a variety of materials, including but not limited to carbon, glass, organics, metallic, ceramic and others. In accordance with the disclosed embodiments, the fibers 24 have a polymeric distortional resin coating 26 thereon having a relatively high distortional deformation capability compared to the distortional deformation capability of the surrounding bulk resin matrix 22. The distortional coating 26 may result in significant improvements in mechanical performance of the composite 20, such as increased ultimate strength and/or strain as well as potential improvements in delamination and micro-crack resistance.

The distortional deformation capability of the resin coating 26, which may be expressed in terms of von Mises strain performance, is high relative to the bulk resin matrix 22 in order to achieve optimum fiber-resin load transfer capability between the fibers 24 and the surrounding resin matrix 22. The von Mises strain or stress is an index derived from combinations of principle stresses at any given point in a material to determine at which point in the material, stress will cause failure. While the bulk polymer resin forming the matrix 22 may have a distortional capability lower than that of the fibers 24, exhibited by a lower von Mises strain performance, the overall mechanical performance of the composite 20 may be significantly improved due to the creation of a distinct distortional inter-phase region 25 surrounding each of the fibers 24. The inter-phase region 25 is the region in the composite 20 that experiences a high shear strain due to the mismatch between the elastic stiffness of the fibers 24 and that of the matrix 22. The distortional or deviatoric response of the polymer resin matrix 22 to an applied force may be viewed as an abrupt shear transformation or cooperative motion of a specific volume or segment of the polymer chain responding to a strain bias. The distortional resin coating 26 on the fibers 24 may also be beneficial in mitigating the effects of transverse micro-cracks created by excessive thermal strains generated in the inter-phase region 25, particularly in composites 20 using a high temperature resin in the matrix 22.

The distortional resin coating 26 may be similar to the polymeric resins described in US Patent No. 7,745,549, the entire disclosure of which patent is incorporated by reference herein. The polymeric resins disclosed in the above mentioned US Patent exhibit increased distortional deformation, and/or decreased dilatation load, as expressed within the von Mises strain relationship. As discussed in this prior US Patent, fiber performance may be limited by low matrix-critical distortional capability of the thermoset resins used in known composites. The composite polymer matrix disclosed in this prior patent exhibits improved (i.e. increased) distortional deformation and/or decreased (i.e. lower) dilatation load, increasing von Mises strain and providing enhanced composite mechanical performance.

It is hypothesized that that a resin with improved distortional capability is able to transfer load around microscale flaws in the fiber, which can be considered failure initiation sites in the fiber, along the longitudinal axis of the fiber when the fiber experiences a load. This ability to redistribute the load around the flaws may allow the fiber to continue to sustain load without failure. The molecular basis for a polymer matrix ability to undergo a distortional response to an applied force is theorized as being due to a cooperative motion of a specific volume or segment of the polymer chain. Therefore, molecular structures which are able to conformally adjust with applied force will enhance the polymer's ability to undergo and increase its distortional response.

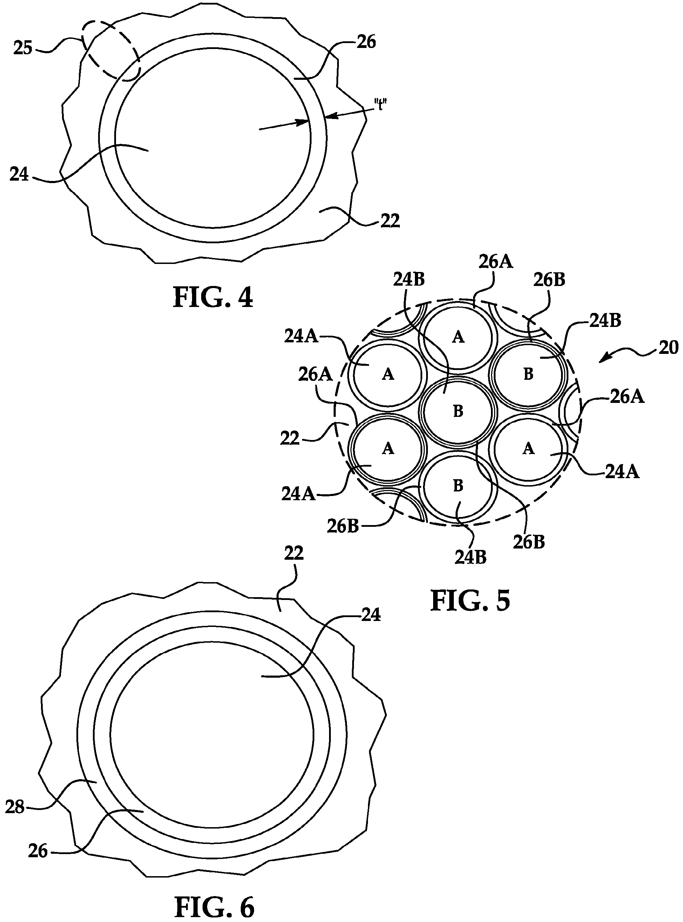

FIG. 2 illustrates an individual fiber tow 23 pre-impregnated with the resin forming the matrix 22 (FIG. 1) and comprising a multiplicity of individual filaments or fibers 24 each having a distortional coating 26 surrounded by the matrix resin. The distortional resin coating 26 may be applied to the fibers 24 using any of various conventional techniques, including but not limited to dipping and spraying. The thickness "t" (FIG. 4) of the coating 26 will depend upon the particular application and performance requirements of the composite 20. The bulk resin matrix 22 may comprise any of a variety of polymeric resins used in high performance structural composites.

As previously discussed, in fiber reinforced composites, the efficiency of load transfer between the reinforcing fibers 24 and the surrounding matrix 22 at the microscale level substantially affects the overall mechanical performance of the composite 20. The critical region of the matrix 20 affected by the presence of the fibers 24, is the inter-phase region 25. This inter-phase region 25 experiences relatively high shear strain due to the mismatch between the relatively high elastic stiffness of the fibers 24 and the relatively low elastic stiffness of the surrounding matrix 22.

The polymeric resin forming the matrix 22 may be any suitable commercial or custom resin system having the desired physical properties which are different from those of the distortional resin coating 26. These differences in physical properties result in the distortional resin coating 26 having a higher distortional capability than that of the matrix 22. For example and without limitation, typical physical properties of the bulk polymeric resin used in the matrix 22 which may affect its distortional capability include but are not limited to: superior fluid resistance, increased modulus, increased high temperature performance, improved process ability and/or handling properties (such as the degree of tack and tack life) relative to the distortional resin coating 26.

Where the composite 20 is produced from a prepreg, the polymeric distortional resin coating 26 may be applied to the fibers 24 prior to impregnation of the fibers 24 with the bulk resin forming the matrix 22. By impregnating the fibers 24 after the coating 26 is applied, a variety of well-known processes may be used to coat the fibers 24. Following curing, the resin impregnated, coated fibers 24 become embedded in the surrounding matrix 22. The composite 20 may also be produced by infusing a distortional resin coated fiber preform (not shown) with the matrix resin. During curing of the resin infused preform, the distortional resin coated fibers become embedded in the matrix 22.

FIG. 5 illustrates a composite 20 having two groups reinforcing fibers 24a, 24b respectively having high and low moduli. Composites 20 having fibers 24a, 24b with different moduli are sometimes referred to as hybrid composites. The differing moduli of the fibers 24a, 24b result in a thermal mismatch between these fibers 24a, 24b that may cause generation of micro-cracks in the composite 20. However in accordance with the disclosed embodiments, the application of a distortional resin coating 26 on the fibers 24a, 24b accommodates the thermal strain mismatch via molecular-level arrangements of the distortion coating 26. In some embodiments, differing coatings 26a, 26b may be respectively applied to the fibers 24a, 24b having differing physical characteristics that assist in accommodating the thermal strain mismatch.

Referring to FIG. 6, it may be desirable in some applications to apply multiple coatings 26, 28 of distortional resins over a fiber 24 which respectively have differing distortional deformation capabilities to form a transitional region that increases the load transfer ability between the fiber 24 and the surrounding bulk resin forming the matrix 22. In this example, the distortional deformation capability of the outer coating 28 may be greater than that of the inner coating 26.

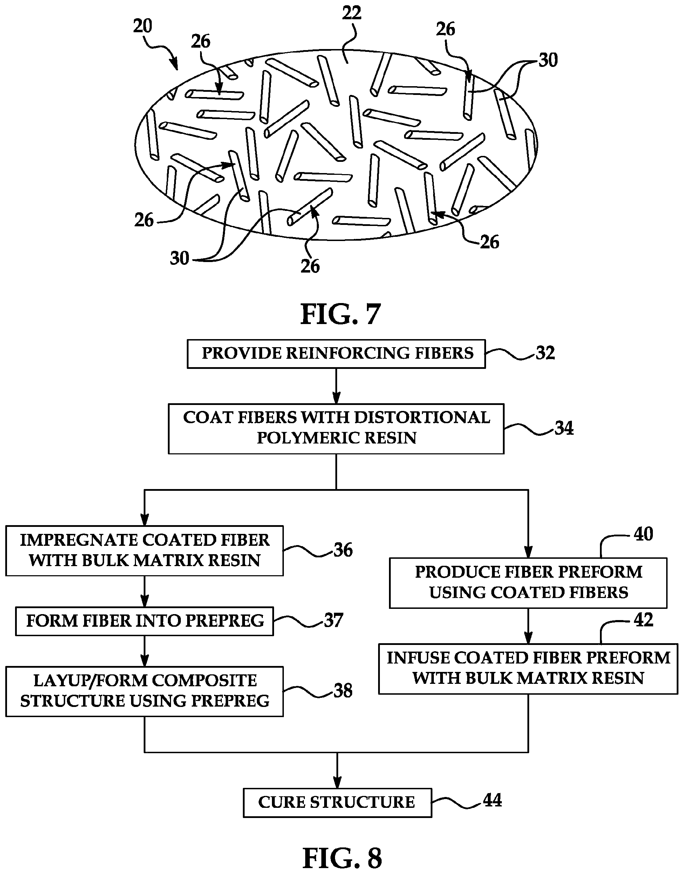

FIG. 7 illustrates a composite 20 comprising a polymeric matrix 22 that is reinforced with discontinuous fibers 30, sometimes referred to as chopped fibers, each of which has a distortional coating 26.

Attention is now directed to FIG. 8 which broadly illustrates the steps of a method of manufacturing a composite structure (not shown) using the composite 20 previously described. Beginning at 32, reinforcing fibers 24 suitable for the application are provided which, as previously mentioned, may be continuous or discontinuous. At 34, the fibers 24 are coated with a distortional polymeric resin having a distortional capability that is greater than that of the polymeric resin forming the matrix 22.

In one embodiment, at step 36, the coated fibers 24 are impregnated with the bulk matrix resin, and at step 37 the impregnated, coated fibers 24 are formed into to a prepreg which may comprise prepreg tows, prepreg tape or a prepreg fabric. At 38, a composite structure is laid up and formed using the prepreg. In another embodiment, as shown in step 40, the resin coated fibers 24 are used to produce a dry or substantially dry fiber preform which, at step 42, is infused with a bulk matrix resin using, for example, a vacuum assisted resin transfer molding process. Finally, at 44, the structure is cured. During curing, the distortional resin coated fibers 24 are embedded in the surround matrix 22, resulting in the previously described inter-phase region 25 between the fibers 24 and the matrix 22.

In some applications, it may be necessary to control migration of the distortion resin coating 26 during the curing process. One solution to this problem involves formulating the distortional polymeric resin coating 26 to have a viscosity that is higher than that of the bulk resin forming the matrix 22. During curing, the distortional resin 26 is retained on the fibers' surface due to its higher viscosity and lessened ability to flow. Another solution to the problem consists of exposing the distortional coated fibers 24 to an appropriate elevated temperature after the fibers 24 are coated in order to slightly cross link (cure) the distortional resin, thereby increasing its viscosity and its adherence to the fibers 24.

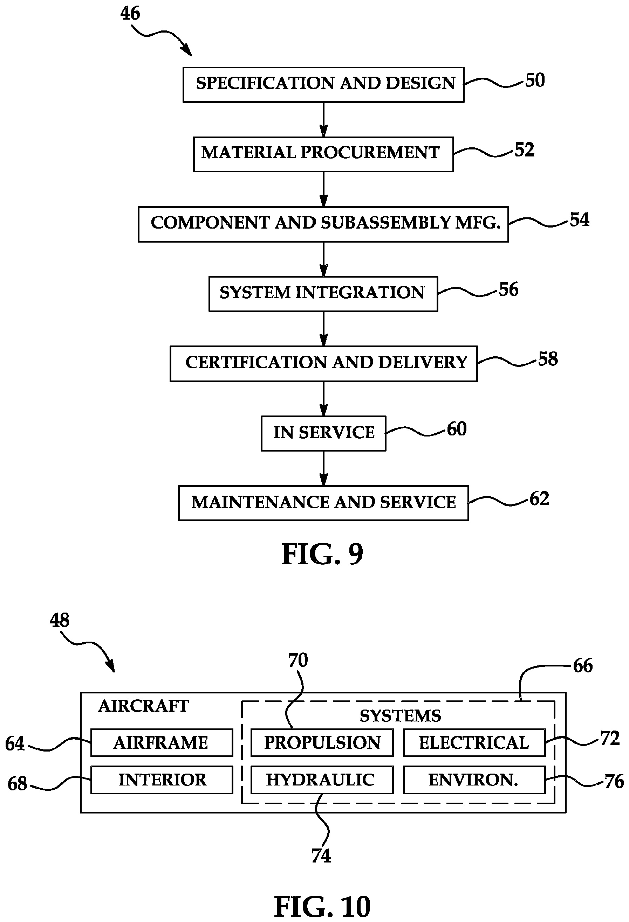

Referring next to FIGS. 9 and 10, embodiments of the disclosure may be used in the context of an aircraft manufacturing and service method 46 as shown in FIG. 9 and an aircraft 48 as shown in FIG. 10. During pre-production, exemplary method 46 may include specification and design 50 of the aircraft 48 and material procurement 52. During production, component and subassembly manufacturing 54 and system integration 56 of the aircraft 48 takes place. During step 54, the disclosed method and apparatus may be employed to fabricate composite parts forming parts which are then assembled at step 56. Thereafter, the aircraft 48 may go through certification and delivery 58 in order to be placed in service 60. While in service by a customer, the aircraft 48 may be scheduled for routine maintenance and service 62 (which may also include modification, reconfiguration, refurbishment, and so on).

Each of the processes of method 46 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 10, the aircraft 48 produced by exemplary method 46 may include an airframe 64 with a plurality of systems 66 and an interior 68. The disclosed method and apparatus may be employed to fabricate composite parts that form part of the airframe 64 or the interior 68. Examples of high-level systems 66 include one or more of a propulsion system 70, an electrical system 72, a hydraulic system 74 and an environmental system 76. Any number of other systems may be included. Although an aerospace example is shown, the principles of the invention may be applied to other industries, such as the automotive industry.

The apparatus embodied herein may be employed during any one or more of the stages of the production and service method 46. For example, components or subassemblies corresponding to production process 54 may be fabricated or manufactured in a manner similar to components or subassemblies produced while the aircraft 48 is in service. Also, one or more apparatus embodiments may be utilized during the production stages 54 and 56, for example, by substantially expediting assembly of or reducing the cost of an aircraft 48. Similarly, one or more apparatus embodiments may be utilized while the aircraft 48 is in service, for example and without limitation, to maintenance and service 62.

Although the embodiments of this disclosure have been described with respect to certain exemplary embodiments, it is to be understood that the specific embodiments are for purposes of illustration and not limitation, as other variations will occur to those of skill in the art.

## Claims

1. A method of making a fiber reinforced polymer resin, including,
coating reinforcing fibers (24) with a first polymeric resin (26); and
embedding the coated fibers in a second polymeric resin (22), wherein a distortional deformation capability of the first polymeric resin is greater than that of the second polymeric resin (22).

2. The method of claim 1, wherein the first polymeric resin (26) is a high temperature resin.

3. The method of claim 1 or 2, wherein the fibers (24) have a high modulus in relation to the modulus of the first polymeric resin (26).

4. The method of claim 1, further including,
selecting the fibers (24) from the group consisting of:
carbon fibers,
glass fibers,
organic fibers,
metallic fibers, and
ceramic fibers.

5. The method of claim 1 or claim 2, further including,
applying a coating of a third polymeric resin (28) over the coating of the first polymeric resin (26), wherein the third polymeric resin (28) has a distortional deformation capability greater than the first polymeric resin (26) but less than the second polymeric resin (22).

6. A fiber reinforced resin composite having improved distortional deformation capability, including,
a polymeric resin matrix (22);
reinforcing fibers (24) held in the matrix; and
a coating (26) on the fibers for improving load transfer between the fibers and the matrix,
wherein the coating (26) includes a polymeric resin having a distortional deformation capability greater than that of the resin matrix (22).

7. The fiber reinforced resin composite of claim 6, wherein:
the coating includes first and seconds layers of polymeric resin respectively having differing distortional deformation capabilities each greater than the distortional deformation capability of the resin matrix (22).

8. The fiber reinforced resin composite of any of claims 6 to 7, wherein the fibers (24) are impregnated with the resin matrix (22).

9. The fiber reinforced resin composite of any of claims 6 to 8, wherein:
the fibers (24) include at least two groups thereof respectively having differing stiffnesses.

10. The fiber reinforced resin composite of any of claims 6 to 9, wherein
the fibers (24) include at least two groups thereof respectively having differing strengths.

11. The fiber reinforced resin composite of any of claims 6 to 10, wherein the fibers are carbon fibers.

12. The fiber reinforced resin composite of any of claims 6 to 10, wherein the fibers are glass fibers.

13. The fiber reinforced resin composite of any of claims 6 to 10, wherein the fibers are organic fibers.

14. The fiber reinforced resin composite of any of claims 6 to 10, wherein the fibers are metallic fibers.

15. The fiber reinforced resin composite of any of claims 6 to 10, wherein the fibers are ceramic fibers.

## Patentansprüche

1. Verfahren zur Herstellung eines faserverstärkten Polymerharzes, mit:
Beschichten von Verstärkungsfasern (24) mit einem ersten Polymerharz (26); und
Einbetten der beschichteten Fasern in ein zweites Polymerharz (22), wobei eine Verformungsfähigkeit des ersten Polymerharzes größer ist als die des zweiten Polymerharzes (22).

2. Verfahren nach Anspruch 1, wobei das erste Polymerharz (26) ein Hochtemperaturharz ist.

3. Verfahren nach Anspruch 1 oder 2, wobei die Fasern (24) ein hohes Modul im Verhältnis zum Modul des ersten Polymerharzes (26) aufweisen.

4. Verfahren nach Anspruch 1 , ferner mit
Auswählen der Fasern (24) aus der Gruppe, die folgende enthölt:
Kohlefasern, Glasfasern, organische Fasern, metallische Fasern und Keramikfasern.

5. Verfahren nach Anspruch 1 oder Anspruch 2, ferner mit weiterer,
Aufbringen einer Beschichtung aus einem dritten Polymerharz (28) über die Beschichtung des ersten Polymerharzes (26), wobei das dritte Polymerharz (28) ein Verformungsvermögen hat, das größer als das des ersten Polymerharz (26), aber kleiner als das des zweite Polymerharz (22) ist.

6. Faserverstärkter Harzverbundstoff mit verbesserter Verformungsfähigkeit, mit:
einer polymeren Harzmatrix (22);
Verstärkungsfasern (24), die in der Matrix gehalten sind; und
einer Beschichtung (26) auf den Fasern zur Verbesserung der Lastübertragung zwischen den Fasern und der Matrix,
wobei die Beschichtung (26) ein Polymerharz mit einem Verformungsvermögen aufweist, das größer als das der Harzmatrix (22) ist.

7. Faserverstärkter Harzverbundstoff nach Anspruch 6, wobei:
die Beschichtung erste und zweite Schichten aus Polymerharz enthält, die jeweils ein unterschiedliches Verformungsvermögen haben, das jeweils größer ist als das Verformungsvermögen der Harzmatrix (22).

8. Faserverstärkter Harzverbundstoff nach einem der Ansprüche 6 bis 7, wobei die Fasern (24) mit der Harzmatrix (22) imprägniert sind.

9. Faserverstärkter Harzverbundstoff nach einem der Ansprüche 6 bis 8, wobei:
die Fasern (24) mindestens zwei Gruppen mit jeweils unterschiedlichen Steifigkeiten umfassen.

10. Faserverstärkter Harzverbundstoff nach einem der Ansprüche 6 bis 9, wobei
die Fasern (24) mindestens zwei Gruppen mit jeweils unterschiedlicher Stärke umfassen.

11. Faserverstärkter Harzverbundstoff nach einem der Ansprüche 6 bis 10, wobei die Fasern Kohlefasern sind.

12. Faserverstärkter Harzverbundstoff nach einem der Ansprüche 6 bis 10, wobei die Fasern Glasfasern sind.

13. Faserverstärkter Harzverbundstoff nach einem der Ansprüche 6 bis 10, wobei die Fasern organische Fasern sind.

14. Faserverstärkter Harzverbundstoff nach einem der Ansprüche 6 bis 10, wobei die Fasern metallische Fasern sind.

15. Faserverstärkter Harzverbundstoff nach einem der Ansprüche 6 bis 10, wobei die Fasern keramische Fasern sind.

## Revendications

1. Procédé de fabrication d'une résine polymère renforcée de fibres, comportant l'enrobage de fibres de renforcement (24) avec une première résine polymère (26) ; et l'incorporation des fibres enrobées dans une deuxième résine polymère (22), une capacité de déformation par distorsion de la première résine polymère étant supérieure à celle de la deuxième résine polymère (22).

2. Procédé de la revendication 1, dans lequel la première résine polymère (26) est une résine à haute température.

3. Procédé de la revendication 1 ou 2, dans lequel les fibres (24) ont un module élevé par rapport au module de la première résine polymère (26).

4. Procédé de la revendication 1, comportant en outre
la sélection des fibres (24) dans le groupe constitué par :
des fibres de carbone, des fibres de verre, des fibres organiques, des fibres métalliques, et des fibres céramiques.

5. Procédé de la revendication 1 ou la revendication 2, comportant en outre l'application d'un enrobage d'une troisième résine polymère (28) sur l'enrobage de la première résine polymère (26), la troisième résine polymère (28) ayant une capacité de déformation par distorsion supérieure à celle de la première résine polymère (26), mais inférieure à celle de la deuxième résine polymère (22).

6. Composite en résine renforcée de fibres ayant une capacité de déformation par distorsion améliorée, comportant
une matrice de résine polymère (22) ;
des fibres de renforcement (24) contenues dans la matrice ; et
un enrobage (26) sur les fibres pour améliorer le transfert de charge entre les fibres et la matrice,
dans lequel l'enrobage (26) comporte une résine polymère ayant une capacité de déformation par distorsion supérieure à celle de la matrice de résine (22).

7. Composite en résine renforcée de fibres de la revendication 6, dans lequel : l'enrobage comporte des première et deuxième couches de résine polymère ayant respectivement des capacités de déformation par distorsion différentes, chacune supérieure à la capacité de déformation par distorsion de la matrice de résine (22).

8. Composite en résine renforcée de fibres de l'une quelconque des revendications 6 et 7, dans lequel les fibres (24) sont imprégnées avec la matrice de résine (22).

9. Composite en résine renforcée de fibres de l'une quelconque des revendications 6 à 8, dans lequel :
les fibres (24) comportent au moins deux groupes de celles-ci ayant respectivement des rigidités différentes.

10. Composite en résine renforcée de fibres de l'une quelconque des revendications 6 à 9, dans lequel :
les fibres (24) comportent au moins deux groupes de celles-ci ayant respectivement des résistances différentes.

11. Composite en résine renforcée de fibres de l'une quelconque des revendications 6 à 10, dans lequel les fibres sont des fibres de carbone.

12. Composite en résine renforcée de fibres de l'une quelconque des revendications 6 à 10, dans lequel les fibres sont des fibres de verre.

13. Composite en résine renforcée de fibres de l'une quelconque des revendications 6 à 10, dans lequel les fibres sont des fibres organiques.

14. Composite en résine renforcée de fibres de l'une quelconque des revendications 6 à 10, dans lequel les fibres sont des fibres métalliques.

15. Composite en résine renforcée de fibres de l'une quelconque des revendications 6 à 10, dans lequel les fibres sont des fibres céramiques.
